# EUROPEAN PATENT APPLICATION

(11) **EP 4 671 892 A1**
(43) Date of publication of application: **31.12.2025**
(21) Application number: 24759522.6
(22) Date of filing: 02.02.2024
(51) Int. Cl.: G05D 1/00, A01D 34/00

(54) **MOWER CONTROL METHOD AND SYSTEM BASED ON SINGLE JOYSTICK, AND RELATED DEVICE**

(30) Priority: 21.02.2023 CN 202310184285
(71) Applicant: Shenzhen Mammotion Innovation Co., Limited, Shenzhen, Guangdong 518000 (CN)
(72) Inventor: WEI, Jidong, Shenzhen, Guangdong 518000 (CN); CHEN, Jianlin, Shenzhen, Guangdong 518000 (CN)
(74) Representative: Huang, Liwei
(86) International application number: PCT/CN2024/075534
(87) International publication number: WO 2024/174845

(57) **Abstract**

The disclosed embodiment discloses a lawn mower control method, system and related device based on a single joystick. The control method controls the operation of the lawn mower through a virtual single joystick on an electronic device. The method comprises: obtaining a first joystick value of the single joystick, wherein the first joystick value is configured to represent the control ability of the single joystick over the lawn mower; receiving a joystick value adjustment command for the single joystick, wherein the joystick value adjustment command includes a target joystick value adjustment parameter; adjusting the first joystick value according to the target joystick value adjustment parameter to obtain a second joystick value; generating a control command based on the second joystick value and sending the control command to the lawn mower to control the lawn mower to work. **In** this way, during the use of the single joystick, the ability of the single joystick can be adjusted so that the adjusted ability meets the actual needs of the user, which helps to improve the user experience and enables the user to better control the lawn mower with one hand.

## Description

The present application claims priority to Chinese patent application No. 202310184285.8, filed with the Chinese Patent Office on February 21, 2023, and entitled "LAWN MOWER CONTROL METHOD AND SYSTEM BASED ON SINGLE JOYSTICK, AND RELATED DEVICE," the entire disclosures of which are incorporated herein by reference.

### TECHNICAL FIELD

The present disclosure relates to communications technology or internet of things (IoT) technologies, in particular, to a control method, system, and related apparatus for a lawn mower based on a single joystick.

### BACKGROUND

In practical applications, most existing solutions that control device movement using virtual joysticks in mobile apps rely on the direct combination of forward and steering joystick inputs-that is, control is achieved by combining the inputs of two joysticks, which typically requires simultaneous operation with both hands. As a result, users who lack the ability to use both hands are unable to effectively control device movement with one hand. For example, when operating a lawn mower, prolonged use often requires continuous dual-hand control, which can cause inconvenience and discomfort to the user, ultimately diminishing the overall user experience. Therefore, there is an urgent need to address the issue of enabling users with limited access to dual-hand operation to control a lawn mower more effectively with one hand.

### SUMMARY

An embodiment of the present disclosure provides mower control method and system based on single joystick, and related device, which can realize the control of a lawn mower with one hand.

According to a first aspect of the present disclosure provides a lawn mower control method based on a single joystick, wherein the mower control method is configured to control operations of the lawn mower through a virtual joystick provided on an electronic device, the lawn mower control method comprises:
obtaining a first joystick value of the single joystick, wherein the first joystick value corresponds to a control capability of the joystick to the lawn mower;
receiving a joystick value adjustment instruction for the single joystick, wherein the joystick value adjustment instruction includes a target joystick value adjustment parameter;
adjusting the first joystick value according to the target joystick value adjustment parameter to obtain a second joystick value;
generating a control command based on the second joystick value, and sending the control command to the lawn mower, to control the lawn mower to work.

According to a second aspect of the present disclosure provides A lawn mower control system based on a single joystick, wherein the lawn mower control system is applied to an electronic device, and the electronic device is in communication connection with the lawn mower; the system comprises: an obtaining unit, a reception unit, an adjustment unit and a generation unit, wherein,
the obtaining unit is configured to display a virtual single joystick on the electronic device and obtain a first joystick value of the single joystick, wherein the first joystick value corresponds to a control instruction for the lawn mower;
the reception unit is configured to receive a joystick value adjustment instruction for the single joystick, wherein the joystick value adjustment instruction includes a target joystick value adjustment parameter;
the adjustment unit is configured to adjust the first joystick value according to the target joystick value adjustment parameter to obtain a second joystick value;
the generation unit is configured to generate a control command based on the second joystick value, and sending the control command to the lawn mower, to control the lawn mower to work.

According to the second aspect of the present disclosure provides an electronic device, which comprises a processor, a memory, a communication interface, and one or more programs, wherein, the above one or more programs are stored in the above memory and are configured to be executed by the above processor, the above programs include commands for performing the steps in the first aspect of an embodiment of the present disclosure.

According to a fourth aspect of the present disclosure provides the present disclosure provides a non-transitory computer-readable storage medium, wherein the non-transitory computer-readable storage medium stores a computer program for electronic data exchange, wherein the computer program causes a computer to perform some or all of the steps as described in the first aspect of the present disclosure embodiment.

According to a fifth aspect of the present disclosure provides a computer program product, wherein the computer program product includes a non-transitory computer-readable storage medium storing a computer program, which is operable to cause a computer to perform some or all of the steps as described in the first aspect of the present disclosure embodiments. The computer program product can be a software installation package.

According to a sixth aspect of the present disclosure provides a lawn mower control system based on a single joystick. The lawn mower control system based on a single joystick comprises: an electronic device and a lawn mower, wherein the above lawn mower control system based on a single joystick is configured to perform some or all of the steps described in the first aspect of the present disclosure examples.

By implementing the present disclosure examples, the following beneficial effects are achieved:
The lawn mower control method, system and related device based on a single joystick described in the present disclosure control the operation of the lawn mower through a virtual single joystick on an electronic device, obtaining a first joystick value of the single joystick, wherein the first joystick value corresponds to a control capability of the joystick to the lawn mower; receiving a joystick value adjustment instruction for the single joystick, wherein the joystick value adjustment instruction includes a target joystick value adjustment parameter; adjusting the first joystick value according to the target joystick value adjustment parameter to obtain a second joystick value; generating a control command based on the second joystick value, and sending the control command to the lawn mower, to control the lawn mower to work. This can adjust the capabilities of the single joystick during the use of the single joystick so that the adjusted capabilities meet the actual needs of users, which helps improve user experience. It not only enables users lacking the conditions for two-handed control to better control the lawn mower with one hand, but also improves the control efficiency of the lawn mower based on the single joystick.

### BRIEF DESCRIPTION OF THE DRAWINGS

In order to more clearly illustrate the technical solutions in the embodiments of this application or the prior art, the accompanying drawings that need to be used in the description of the embodiments or the prior art will be briefly introduced below. Obviously, the accompanying drawings described below are just some embodiments of this application. For those of ordinary skill in the art, other accompanying drawings can also be obtained based on these accompanying drawings without creative efforts.
Figure 1 is a schematic diagram of the architecture of a single-joystick lawn mower control system provided by an embodiment of the present disclosure for implementing a single-joystick lawn mower control method.
Figure 2 is a flowchart of a single-joystick lawn mower control method provided by an embodiment of the present disclosure.
Figure 3 is a schematic diagram of a single joystick provided by an embodiment of the present disclosure.
Figure 4 is a schematic diagram demonstrating the distribution of stroke for a single joystick provided by an embodiment of the present disclosure.
Figure 5 is a flowchart of another single-joystick lawn mower control method provided by an embodiment of the present disclosure.
Figure 6 is a structural schematic diagram of an electronic device provided by an embodiment of the present disclosure.
Figure 7 is a block diagram of the functional units of a single-joystick lawn mower control system provided by an embodiment of the present disclosure.

### DETAILED DESCRIPTION OF ILLUSTRATIVE EMBODIMENTS

In order for those skilled in the art to better understand the technical solutions of this application, the following will combine the accompanying drawings in the embodiments of this application to clearly and completely describe the technical solutions in the embodiments of this application. Obviously, the described embodiments are only a part of the embodiments of this application, rather than all of them. Based on the embodiments in this application, all other embodiments obtained by those of ordinary skill in the art without creative efforts fall within the scope of protection of this application.

The terms "first", "second", etc. in the specification and claims of this application and the above accompanying drawings are used to distinguish different objects, rather than to describe a specific sequence. In addition, the terms "comprising" and "having" and any of their variants are intended to cover non-exclusive inclusions. For example, a process, method, system, product, or device that includes a series of steps or units is not limited to the listed steps or units, but optionally includes unlisted steps or units, or optionally includes other steps or units inherent to these processes, methods, products, or devices.

The mention of "embodiments" herein means that the specific features, structures, or characteristics described in connection with the embodiments can be included in at least one embodiment of this application. The occurrence of this phrase at various places in the specification does not necessarily refer to the same embodiment, nor is it an independent or alternative embodiment that is mutually exclusive with other embodiments. It is explicitly and implicitly understood by those skilled in the art that the embodiments described herein can be combined with other embodiments.

The electronic devices described in the embodiments of this disclosure can include smartphones (such as Android phones, iOS phones, Windows Phone phones, etc.), tablet computers, palmtop computers, vehicle recorders, servers, laptop computers, mobile Internet devices (MID, Mobile Internet Devices), or wearable devices (such as smart watches, Bluetooth headsets), etc. The above are only examples, not exhaustive, including but not limited to the above electronic devices. The electronic device can also be a server, which can be an outsourced server, a cloud server, an edge server, etc., without limitation herein.

In the embodiment of the present disclosure, the first joystick value corresponds to a control capability of the joystick to the lawn mower. Different joystick values can correspond to different control instruction for the lawn mower, or different joystick values can correspond to different control parameters of the control commands. The control parameters are used to adjust the execution effect of the control commands. For example, if the control command is a left-turn command, the control parameter can include the left-turn rate or left-turn angle. In specific implementations, a preset mapping relationship between joystick values and control commands can be set in advance, or alternatively, a preset mapping relationship between joystick values and the control parameters of control commands can be set in advance.

The embodiments of the present disclosure are described in detail below.

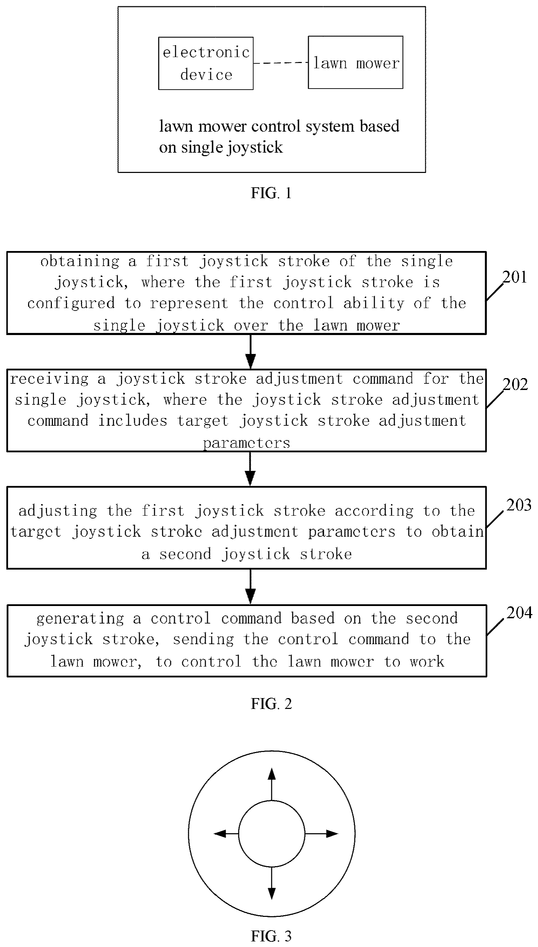

Please refer to Figure 1, which is a schematic diagram of the architecture of lawn mower control system based on a single-joystick provided by an embodiment of the present disclosure for implementing lawn mower control method based on a single-joystick, as shown in the figure, the lawn mower control system based on the single joystick comprises: an electronic device and a lawn mower. The electronic device is in communication connection with the lawn mower; the electronic device controls the lawn mower to operate via the single joystick.

In specific implementations, the control system of a lawn mower based on a single joystick can be used to achieve the following functions:
Displaying a virtual single joystick on the electronic device, the obtaining unit is configured to display a virtual single joystick on the electronic device and obtain a first joystick value of the single joystick, wherein the first joystick value corresponds to a control capability of the joystick to the lawn mower;
the reception unit is configured to receive a joystick value adjustment instruction for the single joystick, wherein the joystick value adjustment instruction includes a target joystick value adjustment parameter;
the adjustment unit is configured to adjust the first joystick value according to the target joystick value adjustment parameter to obtain a second joystick value;
the generation unit is configured to generate a control command based on the second joystick value, and sending the control command to the lawn mower, to control the lawn mower to work. Based on the above embodiments of the present disclosure, it is possible to adjust the capabilities of a single joystick during the use of a single joystick, so that the adjusted capabilities meet the actual needs of users, which helps to improve user experience. It not only enables users lacking two-handed control conditions to better control the lawn mower with one hand, but also improves the efficiency of controlling the lawn mower based on a single joystick.

Please refer to Figure 2. Figure 2 is a schematic flowchart of a lawn mower control method based on a single joystick provided by an embodiment of the present disclosure, which is applied to the lawn mower control system based on a single joystick shown in Figure 1. The above control method controls the operation of the lawn mower through a virtual single joystick on an electronic device; as shown, the lawn mower control method based on a single joystick comprises:
201, Obtaining a first joystick value of the single joystick, where the first joystick value corresponds to a control capability of the joystick to the lawn mower.

In the embodiment of the present disclosure, a virtual single joystick can be displayed on the electronic device when entering the single joystick mode, and this single joystick can be configured to adjust the operation of the lawn mower. Specifically, for example, the forward speed of the lawn mower can be controlled through the single joystick. As shown in Figure 3, Figure 3 provides a schematic diagram of a single joystick, and the rotation of the lawn mower can be realized by using the single joystick.

Among them, the first joystick value can be preset or set by default by the system. Of course, the first joystick value can also be set dynamically. In the embodiment of the present disclosure, the first joystick value can be configured to represent the control capability of a single joystick over the lawn mower.

202, Receiving a joystick value adjustment command for the single joystick, where the joystick value adjustment instruction includes a target joystick value adjustment parameter.

In specific implementations, the joystick value adjustment instruction can be entered by the user, or it can be triggered by other conditions. For example, it can be triggered based on a touch parameter, or for instance, it can be triggered based on a mowing task. Specifically, the joystick value adjustment instruction for the single joystick can be received, and joystick value adjustment instruction can include a target joystick value adjustment parameter. Then, the target joystick value adjustment parameter are configured to adjust the first joystick value after responding to the joystick value adjustment instruction.

Alternatively, the above step 202, receiving a joystick value adjustment instruction for the single joystick, may comprise the following steps:
A21, Obtaining the first touch control parameter for the single joystick;
A22, Determining the target joystick value adjustment parameter corresponding to the first touch control parameter;
A23 , Generating the joystick value adjustment instruction based on the target joystick value adjustment parameter.

In some embodiment, the first touch control parameter may include touch control parameter generated by the user performing touch control operations on a designated area of the display screen. The designated area may be set by the user or default to the system. For example, the designated area may be the area where the single joystick is located, or the designated area may also be an area outside of the single joystick. Specifically, the first touch control parameter may include at least one of the following: touch control force, touch control duration, touch control times, touch control area, touch control position, etc., without limitation herein.

In specific implementations, a first mapping relationship between preset touch control parameters and joystick value adjustment parameters can be stored in advance. Consequently, the target joystick value adjustment parameter corresponding to the first touch control parameter can be determined based on the first mapping relationship. Then, a joystick value adjustment command can be generated based on the target joystick value adjustment parameter. Further, the initial joystick value (the first joystick value) can be adjusted based on the user's touch operation, so that the adjusted joystick value can meet the user's actual mowing needs, which helps improve user experience.

Optional, the above step 202, receiving a joystick value adjustment instruction for the single joystick, may include at least one of the following:
B21, Obtaining a target mowing task, wherein the target mowing task includes target attribute information of the target lawn need to be operated;
B22, Determining the target joystick value adjustment parameter corresponding to the target attribute information;
B23, Generating the joystick value adjustment instruction based on the target joystick value adjustment parameter.

In one embodiment, the target mowing task can be preset or set by default by the system. The target lawn can be understood as the mowing object of the target mowing task. The target attribute information of the target lawn may include at least one of the following: lawn area, lawn shape, vegetation coverage density of the lawn, vegetation type of the lawn, height of the grass on the lawn, soil conditions, navigation route of the mower planned for the target mowing task, etc., without limitation here. In practical applications, the target attribute information can be obtained by monitoring the target lawn with sensor devices of the target lawn, and the sensor devices may include at least one of the following: imaging devices, distance measuring devices, laser devices, etc., without limitation thereto. Soil conditions may include at least one of the following: soil composition, soil acidity and alkalinity, etc., without limitation here.

In specific implementation, the target mowing task can be obtained, and then the target attribute information of the target lawn required to operate the target mowing task can be obtained. It is also possible to pre-store a second mapping relationship between preset attribute information of the lawn and joystick value adjustment parameters. Based on the second mapping relationship, the target joystick value adjustment parameter corresponding to the target attribute information can be determined, and then a joystick value adjustment command can be generated based on the target joystick value adjustment parameter. Furthermore, based on the actual situation of the lawn, the joystick value can be adjusted so that the control operation of a single joystick is more in line with the actual situation of the lawn, which helps improve the control effect of the lawn mower and enhances the user experience.

203, Adjusting the first joystick value according to the target joystick value adjustment parameter to obtain a second joystick value.

In the one embodiment, The first joystick value can be adjusted according to the target joystick value adjustment parameter, so that the control of a single joystick is more consistent with the user's requirements, which helps improve user experience.

Optionally, the above step 203, adjusting the first joystick value according to the target joystick value adjustment parameter to obtain a second joystick value, may comprise the following steps:
A41, Adjusting the first joystick value according to the target joystick value adjustment parameter to obtain a first reference joystick value;
A42, Obtaining a target environment parameter;
A43 , Determining the first optimization coefficient corresponding to the target environment parameter;
A44, Optimizing the first reference joystick value according to the first optimization coefficient to obtain the second joystick value.

In one embodiment, the target environment parameter can be the local environment parameter of the lawn mower, or the environment parameter of the target lawn to be operated.
wherein the target environment parameter may include at least one of the following: weather, temperature, humidity, etc., without limitation herein.

In specific implementation, the first joystick value can be adjusted based on the target joystick value adjustment parameter to obtain a first reference joystick value. Then, the target environment parameter are acquired. According to the preset third mapping relationship between the preset environmental parameters and the optimization coefficients, the first optimization coefficient corresponding to the target environment parameter is determined. The second joystick value can be obtained by optimizing the first reference joystick value according to the first optimization coefficient. Wherein, the adjustment process of the target joystick value adjustment parameter is equivalent to a large-scale adjustment process, while the adjustment process of the first optimization coefficient is a fine-tuning process. Thus, the control of a single joystick can meet the actual environment requirements, which helps improve the control effect of the lawn mower and enhances the user experience.

Optionally, the above step 203, adjusting the first joystick value according to the target joystick value adjustment parameter to obtain a second joystick value, may include the following steps:
B21, Adjusting the first joystick value according to the target joystick value adjustment parameter to obtain a second reference joystick value;
B22, Obtaining the target device parameter of the lawn mower;
B23, Determining a second optimization coefficient corresponding to the target device parameter;
B24 , Optimizing the second reference joystick value according to the second optimization coefficient to obtain the second joystick value.

Wherein, in one embodiment, a target device parameter can include at least one of the following: device usage duration, device hardware configuration parameter, device software configuration parameter, etc. This is not limited.

In specific implementation, the first joystick value can be adjusted based on the target joystick value adjustment parameter to obtain a second reference joystick value. Then, the target device parameter are acquired. According to the preset fourth mapping relationship between the preset device parameters and the optimization coefficients, the second optimization coefficient corresponding to the target device parameter is determined. The second reference joystick value is optimized based on the second optimization coefficient to obtain the second joystick value. Wherein, the adjustment process of the target joystick value adjustment parameter is equivalent to a large-scale adjustment process, while the adjustment process of the second optimization coefficient is a fine-tuning process. This enables the control of a single joystick to meet the actual environment requirements, helps improve the control effect of the lawn mower, and helps enhance the user experience.

204, Generating a control command based on the second joystick value, sending the control command to the lawn mower, to control the lawn mower to work.

In one embodiment, a preset fifth mapping relationship between the joystick value and the control command can be stored in advance. Accordingly, based on the fifth mapping relationship, the control command corresponding to the second joystick value can be determined, and then a control command can be sent to the mower to control the mower to work. Specifically, refer to Table 1 below:

**Table 1**

| joystick value | control command |
|---|---|
| (a0, a1) | move only forward |
| [a1, a2) | move forward and turn left |
| [a2, a3) | rotate only to the right |
| [a3, a4) | move backward and turn left |
| [a4, a5) | move only backward |
| [a5, a6) | move backward and turn right |
| [a6, a7) | rotate only to the left |
| [a7, a8) | move forward and turn left |

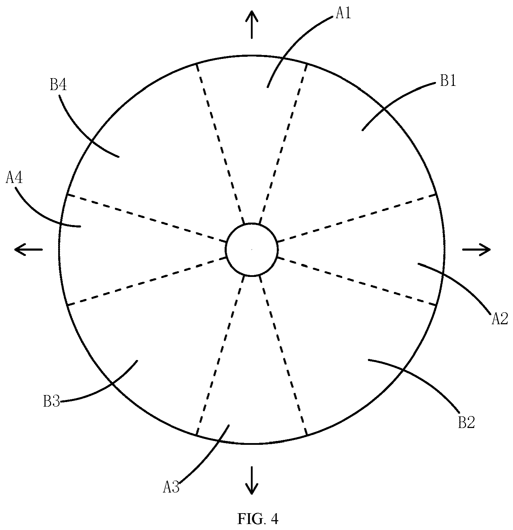

Wherein, a0, a1, a2, a3, a4, a5, a6, a7, and a8 can all be pre-set or have system default values. That is, one joystick value range can correspond to one control command. As shown in Figure 4, each area, for example, A1, A2, A3, A4, B1, B2, B3, and B4, can correspond to one control command. As long as the joystick value is within the range of the corresponding area, only the relevant control command will be generated. Since the joystick value will change to other control commands only when it is outside the range, the command control can be made smoother without sudden changes, which helps improve the control effect of the lawn mower. Of course, during the rotation process, a maximum rotation angle can also be set to prevent the lawn mower from rotating too much and getting out of control. Thus, the smooth rotation of the lawn mower can be ensured to improve the mowing operation effect.

Give another example, as shown in Table 2 below:

**Table 2**

| area | joystick value | control command |
|---|---|---|
| A1 | [-5°, 5°] | move only forward |
| B1 | (5°, 85°) | move forward and turn left |
| A2 | [85°, 95°] | rotate only to the right |
| B2 | (95°, 175°) | move backward and turn left |
| A3 | [175°, -175°] | move only backward |
| B3 | (-175°, -95°) | move backward and turn right |
| A4 | [-95°, -85°] | rotate only to the left |
| B4 | (-85°, -5°) | move forward and turn left |

As can be seen from Table 2, each range of joystick value corresponds to a control command. For example: If the joystick value is in the range of [-5°, 5°], the corresponding control command can be a forward movement command, which realizes the function of moving only forward. If the joystick value is in the range of (5°, 85°), the corresponding control command can be a forward movement and left turn command, which realizes the function of moving forward while turning left. If the joystick value is in the range of [85°, 95°], the corresponding control command can be a right self-rotation command, which realizes the function of rotating only to the right. If the joystick value is in the range of (95°, 175°), the corresponding control command can be a backward movement and left turn command, which realizes the function of moving backward while turning left. If the joystick value is in the range of [175°, -175°], the corresponding control command can be a backward movement command, which realizes the function of moving only backward. If the joystick value is in the range of (-175°, -95°), the corresponding control command can be a backward movement and right turn command, which realizes the function of moving backward while turning right. If the joystick value is in the range of [-95°, -85°], the corresponding control command can be a left self-rotation command, which realizes the function of rotating only to the left. If the joystick value is in the range of (-85°, -5°), the corresponding control command can be a forward movement and left turn command, which realizes the function of moving forward while turning left.

Of course, in specific implementations, during the process of moving forward and turning left, a maximum effective turning angle can also be set, such as -30°; during the process of moving forward and turning right, a maximum effective turning angle can also be set, such as 30°; during the process of moving backward and turning left, a maximum effective turning angle can also be set, such as 30°; during the process of moving backward and turning right, a maximum effective turning angle can also be set, such as 30°.

For another example, assume that the mower has established a communication connection with the electronic device and is moving straight forward. At this time, the corresponding single joystick value is the first joystick value. If the user wants to turn right, a joystick value adjustment command can be received. This joystick value adjustment command can include a joystick value adjustment parameter, and the first joystick value is adjusted through this joystick value adjustment parameter to obtain the second joystick value. Thus, when the second joystick value can trigger a right-turn command, a right-turn command can be sent to the mower to control it to turn right.

In practical applications, it is difficult to achieve the control effect of a single joystick value with two joysticks. For example, in a split joystick, one side of the joystick independently controls forward and backward movement, and the other independent side controls turning left and right. However, in the case of a single joystick, combined joystick value are likely to be formed, resulting in non - straight line movement and unexpected forward movement during turning. The single joystick provided in the implementation example of this application can solve the problem that when a single joystick has to be used for control due to various reasons, the movement control does not meet expectations. It enables users lacking two - handed control conditions to better control the device movement with one hand.

Optionally, the above step 204, generating a control command based on the second joystick value, may include the following steps:
41, Obtaining the second touch control parameter for the single joystick;
42, Generating the control command based on the second touch control parameter and the second joystick value.

In one embodiment, different joystick values can correspond to different control command types. The control command types are used to describe a function or a combination of functions of the lawn mower. Then, based on the second touch control parameter, the control parameter of the corresponding control command types can be adjusted to meet the actual requirements of users. The command types and the corresponding control parameter can form control commands, making the control effect more personalized and meeting the individual requirements of users.

In specific implementations, the first touch control parameter can be used to adjust the first joystick value to obtain a second joystick value. Based on the fifth mapping relationship between the joystick value and the control command, the control command corresponding to the second joystick value can be determined. Under this control command, the control parameter of the control command can be further adjusted to adjust the control effect of the control command. Specifically, the control parameter of the control command are adjusted through the second touch control parameter to make the control effect more consistent with the user's intention, thereby achieving unity of mind and action between the control and the movement of the lawn mower, and further ensuring the control accuracy of the lawn mower.

Optionally, the above step 42, generating the control command according to the second touch control parameter and the second joystick value, may include the following steps:
421, Determining the target control instruction type corresponding to the second joystick value;
422, Determining the target command control parameter corresponding to the second touch control parameter;
423, Generating the control command according to the target control instruction type and the target command control parameter.

In one embodiment, a preset sixth mapping relationship between the joystick value and the control command type can be set in advance. Based on this mapping relationship, the target control instruction type corresponding to the second joystick value can be determined. Also, a preset mapping relationship between the touch parameter and the command control parameter can be stored in advance. Based on this mapping relationship, the target command control parameter corresponding to the second touch parameter can be determined. Then, the target control instruction type and the target command control parameter are combined into a control command, making the control effect more personalized and meeting the individual needs of users.

The method for controlling a lawn mower based on a single joystick described in the present disclosure is applied to an electronic device. The electronic device is in communication connection with the lawn mower, obtains the first joystick value of the single joystick, receives a joystick value adjustment command for the single joystick. The joystick value adjustment command includes a target joystick value adjustment parameter. The first joystick value is adjusted according to the target joystick value adjustment parameter to obtain a second joystick value. Based on the second joystick value, a control command is generated and sent to the lawn mower to control the lawn mower to work. This can adjust the capabilities of the single joystick during the use of the single joystick so that the adjusted capabilities meet the actual needs of users, which helps improve user experience. It not only enables users lacking the conditions for two-handed control to better control the lawn mower with one hand, but also improves the control efficiency of the lawn mower based on the single joystick.

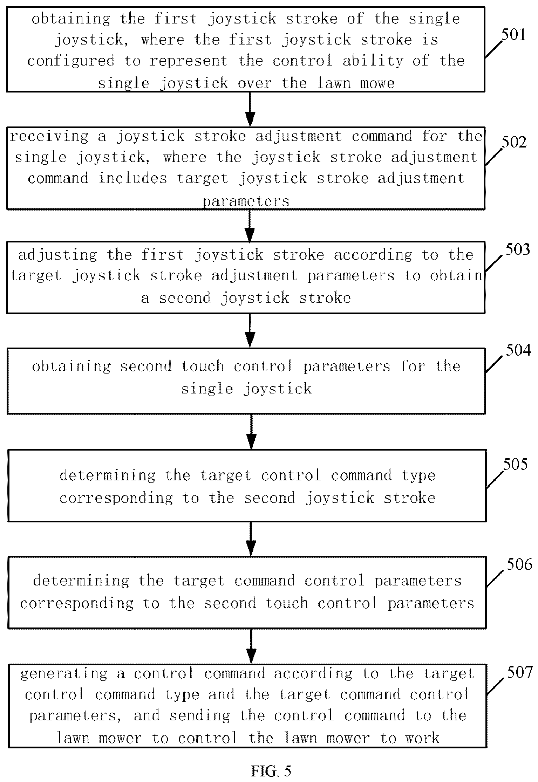

Please refer to Figure 5. Figure 5 is a schematic flowchart of a lawn mower control method based on a single joystick in an embodiment of the present disclosure. It is applied to an electronic device in the lawn mower control system based on a single joystick as shown in Figure 1. The control method controls the operation of the lawn mower through a virtual single joystick on the electronic device. As shown in the figure, the lawn mower control method based on a single joystick comprises:
501 , Obtaining the first joystick value of the single joystick, where the first joystick value is configured to represent the control ability of the single joystick over the lawn mower.
502, Receiving a joystick value adjustment command for the single joystick, where the joystick value adjustment command includes a target joystick value adjustment parameter.
503, Adjusting the first joystick value according to the target joystick value adjustment parameter to obtain a second joystick value.
504, Obtaining a second touch control parameter for the single joystick.
505, Determining the target control instruction type corresponding to the second joystick value.
506, Determining the target command control parameter corresponding to the second touch control parameter.
507, Generating a control command according to the target control instruction type and the target command control parameter, and sending the control command to the lawn mower to control the lawn mower to work.

The specific descriptions of the above steps 501 - 507 can refer to the corresponding steps of the lawn mower control method based on a single joystick described in Figure 2, and will not be reiterated here.

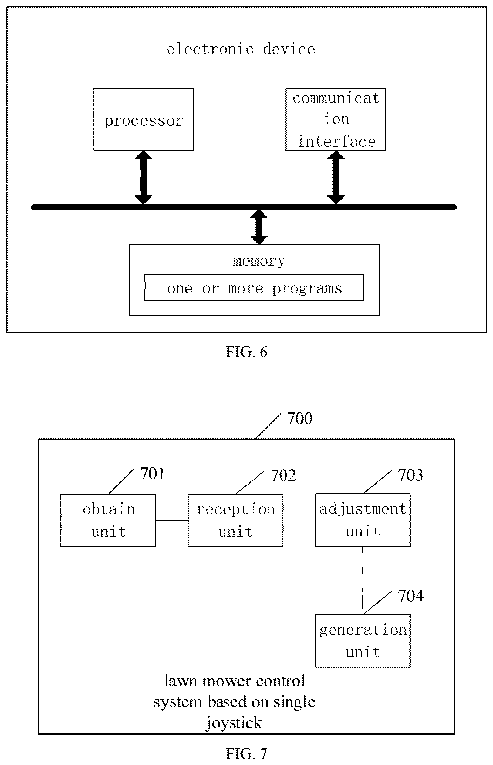

Consistent with the above embodiments, please refer to Figure 6. Figure 6 is a schematic structural diagram of an electronic device provided by an embodiment of this application. As shown in the figure, the electronic device includes a processor, a memory, a communication interface, and one or more programs. The above one or more programs are stored in the above memory and are configured to be executed by the above processor. The electronic device is in communication connection with a lawn mower. In the embodiment of this application, the above programs include instructions for performing the following steps:
obtaining a first joystick value of the single joystick, wherein the first joystick value corresponds to a control capability of the joystick to the lawn mower;
receiving a joystick value adjustment instruction for the single joystick, wherein the joystick value adjustment instruction includes a target joystick value adjustment parameter;
adjusting the first joystick value according to the target joystick value adjustment parameter to obtain a second joystick value;
generating a control command based on the second joystick value, and sending the control command to the lawn mower, to control the lawn mower to work .

Optionally, in the aspect of receiving a joystick value adjustment command for the single joystick, the above program includes commands for performing the following steps:
obtaining a first touch control parameter for the single joystick;
determining the target joystick value adjustment parameter corresponding to the first touch control parameter;
generating the joystick value adjustment instruction based on the target joystick value adjustment parameter.

Optionally, in the aspect of receiving a joystick value adjustment command for the single joystick, the above program includes commands for performing the following steps:
obtaining a target mowing task, wherein the target mowing task includes target attribute information of a target lawn need to be operated;
determining the target joystick value adjustment parameter corresponding to the target attribute information;
generating the joystick value adjustment instruction based on the target joystick value adjustment parameter.

Optionally, in the aspect of adjusting the first joystick value according to the target joystick value adjustment parameter to obtain a second joystick value, the above program includes commands for performing the following steps:
adjusting the first joystick value according to the target joystick value adjustment parameter to obtain a first reference joystick value;
obtaining a target environment parameter;
determining a first optimization coefficient corresponding to the target environment parameter;
optimizing the first reference joystick value according to the first optimization coefficient to obtain the second joystick value .

Optionally, in the aspect of adjusting the first joystick value according to the target joystick value adjustment parameter to obtain a second joystick value, the above program includes commands for performing the following steps:
adjusting the first joystick value according to the target joystick value adjustment parameter to obtain a second reference joystick value;
obtaining a target device parameter of the lawn mower;
determining a second optimization coefficient corresponding to the target device parameter;
optimizing the second reference joystick value according to the second optimization coefficient to obtain the second joystick value.

Optionally, in the aspect of generating a control command based on the second joystick value, the above program includes commands for performing the following steps:
obtaining a second touch control parameter for the single joystick;
generating the control command based on the second touch control parameter and the second joystick value.

Optionally, in the aspect of generating the control command according to the second touch control parameter and the second joystick value, the above program includes commands for performing the following steps:
determining a target control instruction type corresponding to the second joystick value;
determining a target command control parameter corresponding to the second touch control parameter;
generating the control command based on the target control instruction type and the target command control parameter.

The electronic device described in the present disclosure is in communication connection with a lawn mower. It obtains a first joystick value of a single joystick, receives a joystick value adjustment command for the single joystick. The joystick value adjustment command includes a target joystick value adjustment parameter. The first joystick value is adjusted according to the target joystick value adjustment parameter to obtain a second joystick value. Based on the second joystick value, a control command is generated and sent to the lawn mower to control the lawn mower to work. During the use of the single joystick, the capability of the single joystick can be adjusted so that the adjusted capability meets the actual needs of users, which helps to improve the user experience. It not only enables users lacking the condition of two-handed control to better control the lawn mower with one hand, but also improves the efficiency of controlling the lawn mower based on the single joystick.

Figure 7 is a functional unit composition block diagram of a lawn mower control system 700 based on a single joystick involved in the implementation example of this application. The lawn mower control system 700 based on a single joystick is applied to electronic devices, which are in communication connection with the lawn mower; the system 700 includes: an obtaining unit 701, a reception unit 702, an adjustment unit 703, and a generation unit 704, wherein,

The obtaining unit 701 is configured to display a virtual single joystick on the electronic device and obtain a first joystick value of the single joystick, and the first joystick value is configured to represent control capability of the single joystick over the lawn mower;

The reception unit 702 is configured to receive a joystick value adjustment instruction for the single joystick, wherein the joystick value adjustment instruction includes a target joystick value adjustment parameter;

The adjustment unit 703 is configured to adjust the first joystick value according to the target joystick value adjustment parameter to obtain a second joystick value ;

The generation unit 704 is configured to generate a control command based on the second joystick value, and sending the control command to the lawn mower, to control the lawn mower to work.

Optionally, in the aspect of receiving a joystick value adjustment command for the single joystick, the reception unit 702 is specifically used for:
obtaining a first touch control parameter for the single joystick;
determining the target joystick value adjustment parameter corresponding to the first touch control parameter;
generating the joystick value adjustment command based on the target joystick value adjustment parameter.

Optionally, in the aspect of receiving a joystick value adjustment command for the single joystick, the reception unit 702 is specifically used for:
obtaining a target mowing task, wherein the target mowing task includes target attribute information of target lawn need to be operated;
determining the target joystick value adjustment parameter corresponding to the target attribute information;
generating the joystick value adjustment command based on the target joystick value adjustment parameter.

Optionally, in the aspect of adjusting the first joystick value according to the target joystick value adjustment parameter to obtain a second joystick value, the adjustment unit 703 is specifically used for:
adjusting the first joystick value according to the target joystick value adjustment parameter to obtain a first reference joystick value;
obtaining a target environment parameter;
determining a first optimization coefficient corresponding to the target environment parameter;
optimizing the first reference joystick value according to the first optimization coefficient to obtain the second joystick value.

Optionally, in the aspect of adjusting the first joystick value according to the target joystick value adjustment parameter to obtain a second joystick value, the adjustment unit 703 is specifically used for:
adjusting the first joystick value according to the target joystick value adjustment parameter to obtain a second reference joystick value;
obtaining a target device parameter of the lawn mower;
determining a second optimization coefficient corresponding to the target device parameter;
optimizing the second reference joystick value according to the second optimization coefficient to obtain the second joystick value.

Optionally, in the aspect of generating a control command based on the second joystick value, the generation unit 704 is specifically used for:
Obtaining a second touch control parameter for the single joystick;
generating the control command according to the second touch control parameter and the second joystick value.

Optionally, in the aspect of generating the control command according to the second touch control parameter and the second joystick value, the generation unit 704 is specifically used for:
determining a target control instruction type corresponding to the second joystick value;
determining a target command control parameter corresponding to the second touch control parameter;
generating the control command according to the target control instruction type and the target command control parameter.

The lawn mower control system based on a single joystick described in this application is applied to an electronic device. The electronic device is in communication connection with the lawn mower. A virtual single joystick is displayed on the electronic device. The first joystick value of the single joystick is obtained. A joystick value adjustment command for the single joystick is received. The joystick value adjustment command includes a target joystick value adjustment parameter. The first joystick value is adjusted according to the target joystick value adjustment parameter to obtain a second joystick value. Based on the second joystick value, a control command is generated and sent to the lawn mower to control the lawn mower to work. During the use of the single joystick, the capability of the single joystick can be adjusted so that the adjusted capability meets the actual needs of users, which helps improve user experience. It not only enables users lacking the condition of controlling with both hands to better control the lawn mower with one hand, but also improves the control efficiency of the lawn mower based on the single joystick.

It can be understood that the functions of each program module of the lawn mower control system based on a single joystick in this embodiment can be specifically implemented according to the methods in the above method embodiments, and the specific implementation process can refer to the relevant descriptions in the above method embodiments, which are not repeated here.

This application embodiment also provides a computer storage medium, wherein the computer storage medium stores a computer program for electronic data exchange. The computer program enables a computer to execute part or all of the steps of any method recorded in the above method embodiments. The above computer includes electronic devices.

This application embodiment also provides a computer program product. The above computer program product includes a non-transitory computer-readable storage medium storing a computer program. The computer program is operable to enable a computer to execute part or all of the steps of any method recorded in the above method embodiments. The computer program product can be a software installation package. The above computer includes electronic devices.

This application embodiment also provides a lawn mower control system based on a single joystick. The lawn mower control system based on a single joystick includes an electronic device and a server. The lawn mower control system based on a single joystick is configured to execute any of the above methods.

It should be noted that, for the above method embodiments, in order to simplify the description, they are all described as a combination of a series of actions. However, those skilled in the art should understand that this application is not limited by the described action sequence, because according to this application, some steps can be performed in other sequences or simultaneously. Secondly, those skilled in the art should also understand that the embodiments described in the specification are all preferred embodiments, and the actions and modules involved are not necessarily required by this application.

In the above embodiments, the descriptions of each embodiment have their own focuses. For the parts not elaborated in a certain embodiment, one can refer to the relevant descriptions in other embodiments.

In the several embodiments provided by this application, it should be understood that the disclosed system can be implemented in other ways. For example, the system embodiments described above are merely illustrative. For example, the division of the above units is just a logical functional division. In actual implementation, there can be other division methods. For example, multiple units or components can be combined or integrated into another system, or some features can be ignored or not executed. Another point is that the coupling or direct coupling or communication connection shown or discussed between each other can be an indirect coupling or communication connection through some interfaces, systems or units, which can be electrical or other forms.

The units described as separate components above can be physically separated or not. The components displayed as units can be physical units or not, that is, they can be located in one place or distributed on multiple network units. Some or all of the units can be selected according to actual needs to achieve the purpose of this embodiment scheme.

In addition, in each embodiment of this application, the functional units can be integrated into one processing unit, or each unit can exist physically separately, or two or more units can be integrated into one unit. The above integrated units can be implemented in the form of hardware or software functional units.

If the above integrated unit is implemented in the form of a software functional unit and sold or used as an independent product, it can be stored in a computer-readable memory. Based on such an understanding, the essence of the technical solution of this application or the part that contributes to the prior art, or all or part of the technical solution, can be embodied in the form of a software product. This computer software product is stored in a memory and includes several instructions to enable a computer device (which can be a personal computer, server or network device, etc.) to perform all or part of the steps of the above methods in each embodiment of this application. The aforementioned memory includes various media that can store program code, such as USB flash drives, read-only memories (ROMs), random access memories (RAMs), mobile hard disks, magnetic disks or optical disks.

Those of ordinary skill in the art can understand that all or part of the steps in the various methods of the above embodiments can be completed by programming relevant hardware. The program can be stored in a computer-readable memory, which can include: flash drives, read-only memories (abbreviated as: ROM), random access devices (abbreviated as: RAM), disks or optical disks, etc.

The above is a detailed introduction to the embodiments of this application. In this document, specific examples are used to elaborate on the principles and implementation methods of this application. The descriptions of the above embodiments are only for helping to understand the methods of this application and its core ideas. At the same time, for those of ordinary skill in the art, based on the ideas of this application, there will be changes in specific implementation methods and application scopes. In conclusion, the content of this specification should not be understood as a limitation on this application.

## Claims

1. A lawn mower control method based on a single joystick, wherein the mower control method is configured to control operations of the lawn mower through a virtual single joystick provided on an electronic device, the lawn mower control method comprises:
obtaining a first joystick value of the single joystick, wherein the first joystick value corresponds to a control capability of the joystick to the lawn mower;
receiving a joystick value adjustment instruction for the single joystick, wherein the joystick value adjustment instruction includes a target joystick value adjustment parameter;
adjusting the first joystick value according to the target joystick value adjustment parameter to obtain a second joystick value;
generating a control command based on the second joystick value, and sending the control command to the lawn mower, to control the lawn mower to work.

2. The lawn mower method according to claim 1, wherein the receiving a joystick value adjustment command for the single joystick comprises:
obtaining a first touch control parameter for the single joystick;
determining the target joystick value adjustment parameter corresponding to the first touch control parameter;
generating the joystick value adjustment instruction based on the target joystick value adjustment parameter.

3. The lawn mower control method according to claim 1, wherein the receiving the joystick value adjustment instruction for the single joystick comprises:
obtaining a target mowing task, wherein the target mowing task includes target attribute information of a to-be-operated target lawn;
determining the target joystick value adjustment parameter corresponding to the target attribute information;
generating the joystick value adjustment instruction based on the target joystick value adjustment parameter.

4. The lawn mower control method according to claim 2 or 3, wherein the adjusting the first joystick value according to the target joystick value adjustment parameter to obtain the second joystick value comprises:
adjusting the first joystick value according to the target joystick value adjustment parameter to obtain a first reference joystick value;
obtaining a target environment parameter;
determining a first optimization coefficient corresponding to the target environment parameter;
optimizing the first reference joystick value according to the first optimization coefficient to obtain the second joystick value.

5. The lawn mower control method according to claim 2 or 3, wherein the adjusting the first joystick value according to the target joystick value adjustment parameter to obtain the second joystick value comprises:
adjusting the first joystick value according to the target joystick value adjustment parameter to obtain a second reference joystick value;
obtaining a target device parameter of the lawn mower;
determining a second optimization coefficient corresponding to the target device parameter;
optimizing the second reference joystick value according to the second optimization coefficient to obtain the second joystick value.

6. The lawn mower control method according to any one of claims 1 to 3, wherein the generating a control command based on the second joystick value comprises:
obtaining a second touch control parameter for the single joystick;
generating the control command based on the second touch control parameter and the second joystick value.

7. The lawn mower control method according to claim 6, wherein the generating the control command based on the second touch control parameter and the second joystick value comprises:
determining a target control instruction type corresponding to the second joystick value;
determining a target instruction control parameter corresponding to the second touch control parameter;
generating the control command based on the target control instruction type and the target instruction control parameter.

8. A lawn mower control system based on a single joystick, wherein the lawn mower control system is applied to an electronic device, and the electronic device is in communication with the lawn mower; the system comprises: an obtaining unit, a reception unit, an adjustment unit and a generation unit, wherein,
the obtaining unit is configured to display a virtual single joystick on the electronic device and obtain a first joystick value of the single joystick, wherein the first joystick value corresponds to a control capability of the joystick to the lawn mower;
the reception unit is configured to receive a joystick value adjustment instruction for the single joystick, wherein the joystick value adjustment instruction includes a target joystick value adjustment parameter;
the adjustment unit is configured to adjust the first joystick value according to the target joystick value adjustment parameter to obtain a second joystick value;
the generation unit is configured to generate a control command based on the second joystick value, and sending the control command to the lawn mower, to control the lawn mower to work.

9. An electronic device, **characterized in that** the electronic device comprises a processor and a memory, the memory is configured to store one or more programs and is configured to be executed by the processor, the programs comprise instructions for performing the steps in the method according to any one of claims 1 to 7.

10. A non-transitory computer-readable storage medium, **characterized in that** the medium stores a computer program configured for electronic data interchange, wherein the computer program causes a computer to execute the method as described in any one of claims 1 to 7.
